(19) **Europäisches Patentamt / European Patent Office / Office européen des brevets**

(11) **EP 3 426 415 B1**

(12) **FASCICULE DE BREVET EUROPEEN**

(45) Date de publication et mention de la délivrance du brevet:
**26.01.2022 Bulletin 2022/04**

(21) Numéro de dépôt: **17713749.4**

(22) Date de dépôt: **10.03.2017**

(51) Classification Internationale des Brevets (IPC):
**B05D 1/26** (2006.01)  **A47J 36/00** (2006.01)
**B05D 3/02** (2006.01)  **B41J 1/00** (2006.01)

(52) Classification Coopérative des Brevets (CPC):
**B05D 1/26; B05D 3/0254**

(86) Numéro de dépôt international:
**PCT/FR2017/050551**

(87) Numéro de publication internationale:
**WO 2017/153698 (14.09.2017 Gazette 2017/37)**

(54) **PROCÉDÉ DE FABRICATION D'UN REVÊTEMENT THERMOSTABLE PAR IMPRESSION DIGITALE**

VERFAHREN ZUR HERSTELLUNG EINER WÄRMESTABILEN BESCHICHTUNG DURCH DIGITALDRUCK

METHOD FOR PRODUCING A HEAT-STABLE COATING BY DIGITAL PRINTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2016 FR 1652025**

(43) Date de publication de la demande:
**16.01.2019 Bulletin 2019/03**

(73) Titulaire: **SEB S.A.**
**69130 Ecully (FR)**

(72) Inventeurs:
• **CAILLIER, Laurent**
**73100 GRESY- SUR-AIX (FR)**
• **LE BRIS, Stéphanie**
**73000 Chambery (FR)**
• **DAGAND, Sylvain**
**74540 Cusy (FR)**

(74) Mandataire: **Regimbeau**
**20, rue de Chazelles**
**75847 Paris Cedex 17 (FR)**

(56) Documents cités:
EP-A1- 1 921 055        EP-A1- 2 698 453
WO-A1-01/51573          WO-A1-2012/085477
FR-A1- 2 992 324        JP-A- H0 549 541
US-A1- 2012 033 172     US-B1- 6 357 868

**Description**

La présente invention concerne de manière générale un procédé de fabrication d'un article de petit équipement ménager chauffant, et notamment un procédé de fabrication d'un article de petit équipement ménager chauffant comprenant un revêtement thermostable obtenu par impression digitale.

Par article chauffant, on entend, au sens de la présente invention, un article dont la température va augmenter pendant son utilisation. Un tel article peut être soit un article qui possède son propre système de chauffage soit un article qui est chauffé par un système de chauffage extérieur. Un tel article est en outre apte à transmettre l'énergie calorifique apportée par le système de chauffage à un matériau ou objet tiers au contact dudit article.

Par article de petit équipement ménager chauffant, on entend, au sens de la présente invention, les articles culinaires et les articles de petit électroménager.

Plusieurs types de techniques sont connus de l'homme du métier pour obtenir des revêtements thermostables sur des articles de petit équipement ménager.

Il est notamment connu d'utiliser les techniques d'application par sérigraphie, par pulvérisation, au rouleau, par tampographie ou au rideau pour appliquer des revêtements sur des surfaces planes. Chacune de ces techniques présente toutefois des inconvénients pouvant nécessiter le développement de nouvelles méthodologies.

Ainsi, la pulvérisation, le rideau et le rouleau sont des techniques non localisées. Il ne sera pas possible de déposer le revêtement de manière précise et contrôlée. Par ailleurs, la pulvérisation présente l'inconvénient de générer beaucoup de pertes de matière par le phénomène classique d'overspray (c.à.d. toute la partie du cône de pulvérisation qui n'atteint pas la pièce à enduire) qui génère des couts (surconsommation, recyclage des boues...). En outre, la pulvérisation ne permet pas d'obtenir une homogénéité parfaite en termes d'épaisseur si l'on considère la globalité de la surface recouverte. Il en est de même pour la technique du rideau, totalement non adaptée à un dépôt contrôlé et provoquant une réelle surconsommation de matière.

Le rouleau, la sérigraphie et la tampographie sont des techniques de contact. Elles nécessitent donc l'utilisation de sèches entre chaque étape de dépôt. De plus, le contact ponctuel du rouleau ou de l'écran peut générer un aspect tramé au revêtement final, tramage pouvant générer des défauts d'aspects peu qualitatifs. L'impression de dépôts localisés par ce type de technologies nécessite l'utilisation de formes imprimantes (rouleaux, écrans, clichés) spécifiques, engendrant alors un besoin de consommables et des changements de série lourds à gérer de façon industrielle.

La technologie jet d'encre semble être en mesure de répondre aux limites précédentes et a notamment été décrite dans le document brevet WO2012/085477 qui concerne un procédé de fabrication d'un article chauffant comprenant une étape d'application d'un décor au moins bichrome sous la forme d'une couche continue ou discontinue par impression par le procédé jet d'encre.

Cependant, les procédés et compositions décrits dans ce document présentent l'inconvénient majeur, afin d'obtenir un revêtement suffisamment épais pour les utilisations envisagées de l'article, de devoir déposer un nombre important de couches ce qui augmente donc significativement le nombre de passes d'impression, et de devoir procéder à de nombreuses sèches pour obtenir un dépôt homogène et éviter des effets de bord.

Afin de pallier les inconvénients de l'art antérieur, la Demanderesse a développé un procédé de fabrication d'articles de petit équipement ménager chauffant comprenant un revêtement thermostable qui peut être appliqué dans des conditions industrielles.

La présente invention a donc pour objet un procédé de fabrication d'un article de petit équipement ménager chauffant comprenant un substrat ayant au moins deux faces opposées, le procédé comprenant :

- la fourniture dudit substrat ; et
- l'obtention d'un revêtement thermostable sur ledit substrat, ladite obtention comprenant :

  • le dépôt sur au moins une des deux faces opposées dudit substrat d'au moins une couche d'une composition comprenant au moins un liant ; et
  • la cuisson dudit substrat revêtu,

caractérisé en ce que la composition comprenant au moins un liant présente un extrait sec supérieur ou égal à 15 % en poids, et
en ce que ledit dépôt est réalisé par impression digitale au travers d'au moins une buse ayant un orifice d'une taille supérieure ou égale à 100 $\mu$m.

Avantageusement, ladite composition comprenant au moins un liant présente un extrait sec supérieur ou égal à 20 % en poids, de préférence strictement supérieur à 20%. Il est à noter que la composition peut se présenter sous différentes formes comme un fluide, un liquide, un semi-liquide ou une pâte plus ou moins visqueuse.

Il a en effet été déterminé que, pour réaliser un revêtement d'épaisseur suffisante pour les applications de l'article envisagées, l'utilisation de compositions concentrées présente l'avantage de diminuer significativement le nombre de couches et donc le nombre de passes d'impression, ainsi que le nombre de sèches, et de permettre une bonne homogénéité des couches.

En outre, dans l'objectif d'obtenir un revêtement fonctionnel, une taille d'orifice de buse importante permet de faire passer des charges de taille importante.

De préférence, ladite composition comprenant au moins un liant présente un extrait sec inférieur ou égal à 100 % en poids, de préférence compris de 22% à 100%, plus préférentiellement de 25 à 90%, encore plus préférentiellement de 30 à 70%, pourcentage en poids.

L'obtention du revêtement thermostable sur l'une au moins des faces du substrat comprend l'impression digitale d'une composition comprenant au moins un liant.

Par impression, il est entendu au sens de l'invention le dépôt d'une composition comprenant au moins un liant sur un substrat, pour obtenir une couche continue ou discontinue. Avant dépôt, la composition comprenant au moins un liant est la composition à imprimer. Après dépôt, la composition comprenant au moins un liant déposé sur le substrat est la composition imprimée.

Par impression digitale, également appelée impression numérique, on entend, au sens de la présente invention, une impression réalisée directement sur le substrat à partir de données informatiques (ou fichiers numériques) en flux continu entre un ordinateur et la machine imprimante.

Avantageusement, la composition est imprimée sur le substrat sans utiliser de forme imprimante.

Avantageusement, l'impression digitale du revêtement thermostable selon la présente invention est réalisée par un procédé jet d'encre, en utilisant des imprimantes jet d'encre.

Avantageusement, le dépôt du procédé selon l'invention est réalisé par impression digitale par le procédé jet d'encre.

Le procédé jet d'encre est une technique d'impression qui consiste à projeter des gouttelettes d'encre ou de fluide depuis l'orifice d'une buse jusqu'à des positions parfaitement déterminées sur un support. Le procédé jet d'encre est le seul procédé d'impression sans contact, c'est-à-dire que l'encre ou la composition à imprimer est déposée sur le substrat sans recourir à l'utilisation d'un moyen pour la déposer tel que des formes imprimantes (rouleaux, écrans, clichés). L'éjection des gouttelettes est contrôlée informatiquement par des signaux digitaux à haute fréquence. La formation des gouttelettes repose entre autres, sur le contrôle de la pression de l'encre liquide dans son réservoir et dans les buses d'impression lorsque le flux d'encre est cassé ou fractionné en gouttelettes, ou sur l'ouverture de microvalves à haute fréquence libérant alors des gouttelettes. Juste avant son dépôt sur le substrat et juste après son éjection de la buse, l'encre ou la composition à imprimer est seulement en contact avec l'air ambiant et n'est pas en contact avec un quelconque moyen. Plusieurs technologies de procédé jet d'encre existent et sont basées sur différentes solutions de maitrise de la pression de l'encre liquide ou d'ouverture de microvalves et donc sur différentes configurations de têtes d'impression.

Les deux grandes familles de technologie de procédés jet d'encre sont la technique de jet continu et la technique de gouttes à la demande.

La technique de jet continu (en anglais "Continuous ink jet" ou CIJ) repose sur la fragmentation contrôlée d'un jet liquide. Des perturbations provoquent la rupture du jet en gouttelettes de taille maîtrisée, à une vitesse bien déterminée. Cela est obtenu par une synchronisation entre la rupture du jet et sa vitesse. Les gouttelettes de composition à imprimer qui atteignent le support d'impression sont sélectionnées par exemple de manière électrostatique (charge des gouttes, puis déviation de ces gouttes par un champ électrique). Les têtes d'impression de cette technique sont caractérisées par la génération en continu de gouttes de composition à imprimer, les gouttes étant déviées, via un déflecteur, suivant le motif à générer vers un collecteur pour imprimer le motif voulu.

La technique de gouttes à la demande (en anglais "Drop-on-demand" ou DOD) repose sur un procédé physique différent : l'encre se tient dans le réservoir, formant un ménisque au niveau de la buse, jusqu'à ce qu'une pression appliquée au volume de liquide dépasse la tension superficielle, et permette l'éjection d'une gouttelette. Les têtes d'impression de cette technique sont caractérisées par la génération à la demande de gouttes de composition à imprimer, suivant le motif à imprimer. On peut considérer, entre autres, quatre méthodes différentes d'éjection : piézo-électrique, thermique ou bubble-jet, valve-jet ou jet par clapet et la thermofusion.

Avantageusement, le dépôt du procédé selon l'invention est réalisé par impression digitale par le procédé jet d'encre par la technique de gouttes à la demande.

Dans les têtes d'impression de la technique piézoélectrique, les canaux d'acheminement des compositions à imprimer sont entourés de membranes piézoélectriques, qui se déforment, sous l'effet d'une excitation électrique, déformant ainsi les canaux d'acheminement et provoquant l'expulsion de la composition à imprimer.

Dans un autre type de tête d'impression DOD piézoélectrique, tel que décrit dans le brevet US6460980, l'éjection est provoquée par une vibration du canal d'acheminement de l'encre suite à une excitation d'un cristal piézoélectrique soudé sur ce canal. Dans les têtes d'impression de la technique valve-jet l'éjection du fluide est contrôlée par des microvannes.

Ainsi, dans la demande de brevet WO2013/013983, sont décrites des têtes d'impression équipées d'électrovannes qui s'ouvrent et se ferment sous l'effet d'une excitation électrique.

La demande de brevet WO2016/030566 décrit des vannes contrôlées par un matériau piézoélectrique.

La demande de brevet WO2010/146473 décrit pour sa part un dispositif composé d'un système piézoélectrique couplé à une membrane permettant de contrôler l'éjection de gouttes de fluide.

Par buse, il est entendu au sens de l'invention un moyen permettant l'écoulement et la sortie de la composition à imprimer ou élément de sortie. Il peut également s'agir d'un tuyau de conduit ou un équivalent. Il peut s'agir d'un embout ou un équivalent permettant la sortie par pulvérisation. Il peut s'agir d'un tube capillaire ou un équivalent. Il peut s'agir d'un canal d'acheminement ou son équivalent. Il est entendu qu'une buse est indistinctement appelée buse de projection, buse d'impression, buse d'évacuation ou buse de pulvérisation. Une buse peut faire partie d'un d'ensemble de moyens formant une tête d'impression ou encore être la tête d'impression. Généralement, une tête d'impression comprend de 10 à 5 000 buses.

En particulier, les buses peuvent être équipées de moyens permettant de fractionner en gouttelettes la composition à imprimer. Il peut s'agir de moyens qui réduisent la section de la buse, comme par exemple une plaque à buse. Généralement, une gouttelette présente un volume compris de 10 à 10 000 picolitres.

Avantageusement, les gouttelettes forment un jet directionnel, généralement orienté perpendiculairement par rapport à la section de la buse.

Avantageusement, un seul jet directionnel est formé par la buse.

Par jet directionnel, il est entendu au sens de l'invention un alignement de gouttelettes, un nuage de gouttelettes ou une seule gouttelette.

La buse peut-être en matériau métallique, par exemple en inox, en matériau céramique, notamment matériau à propriétés piézoélectriques, en matériau polymère ou leurs mélanges, ou tout matériau conventionnel pour une buse.

La buse comprend un orifice.

Par orifice, il est entendu au sens de l'invention un trou, une fente ou une ouverture permettant la sortie ou l'évacuation de la composition à imprimer.

L'orifice de la buse est situé de préférence à une des extrémités de la buse formant une tête d'éjection de liquide. L'orifice peut être libre, c'est-à-dire en contact uniquement avec l'air ambiant. L'orifice peut être, suivant les configurations, soit droit, soit biseauté. L'orifice peut être réalisé du même matériau que la buse ou bien être un élément rapporté d'un matériau différent ou un matériau traité (traitement chimique, physique) pour lui conférer des propriétés spécifiques.

Une buse peut comprendre un ou plusieurs orifices.

Selon certaine variante, la buse et l'orifice ne forme qu'un seul moyen, en particulier lorsqu'il s'agit d'un trou le long d'une conduite d'acheminement ou lorsqu'il s'agit de l'extrémité de cette conduite.

La taille de l'orifice de la buse mise en œuvre dans le procédé selon l'invention permet d'adapter le dépôt de la composition à imprimer en faisant varier la taille de l'orifice en fonction des propriétés physico-chimiques de la composition à imprimer, telles que la viscosité, la tension de surface, le type, la nature, la taille de particules, la densité ou l'extrait sec.

Selon la présente invention, l'orifice de la buse a une taille supérieure ou égale à 100 $\mu$m.

Par taille de l'orifice de la buse, il est entendu la plus petite dimension d'ouverture de la buse. Par exemple, si l'orifice de la buse présente une section circulaire, dans ce cas la plus petite dimension d'ouverture est le diamètre de ce cercle. Si l'orifice de la buse présente une section ovoïde, dans ce cas la plus petite dimension d'ouverture est le plus petit diamètre de cet ovale. Si l'orifice de la buse présente une section rectangulaire, dans ce cas la plus petite dimension d'ouverture est le plus petit coté de ce rectangle.

Avantageusement, l'orifice de la buse a une taille inférieure ou égale à 1,5 mm, de préférence inférieure ou égale à 1 mm et plus préférentiellement inférieure ou égale à 800 $\mu$m.

De préférence, la taille de l'orifice de la buse est comprise de 100 $\mu$m à 650 $\mu$m.

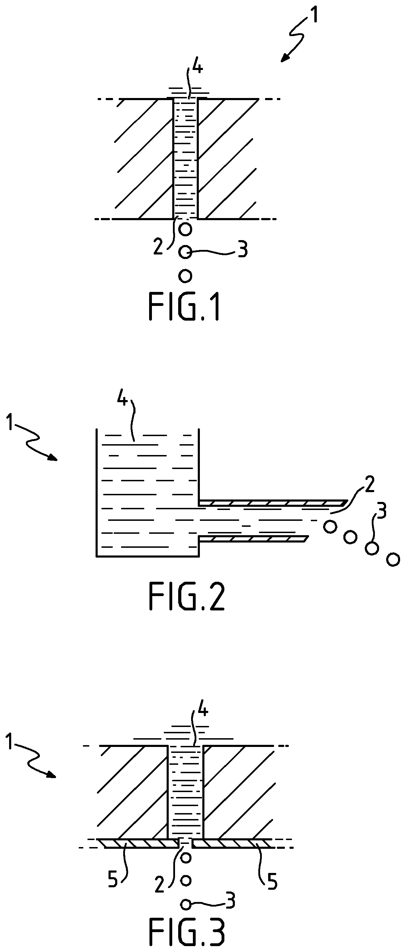

La figure 1 illustre une vue schématique de profil d'un premier mode de réalisation d'une buse convenant pour la mise en œuvre du procédé selon l'invention par impression digitale. La buse 1 est munie d'un orifice 2 générant un jet directionnel de gouttelettes de composition à imprimer 3. La buse est munie d'une arrivée ou alimentation 4 en composition à imprimer.

La figure 2 illustre une vue schématique de profil d'un second mode de réalisation d'une buse convenant pour la mise en œuvre du procédé selon l'invention par impression digitale. La buse 1 est munie d'un orifice 2 biseauté générant un jet directionnel de gouttelettes de composition à imprimer 3. La buse est munie d'une arrivée ou alimentation 4 en composition à imprimer.

La figure 3 illustre une vue schématique de profil d'un troisième mode de réalisation d'une buse convenant pour la mise en œuvre du procédé selon l'invention par impression digitale, qui est une variante de la figure 1 où la lumière de la buse est réduite par une plaque à buse 5 formant un orifice 2 réduit. La buse 1 est munie d'un orifice 2 réduit comparé à celui de la figure 1 générant un jet directionnel de gouttelettes de composition à imprimer 3. La buse est munie d'une arrivée ou alimentation 4 en composition à imprimer. Le matériau de la plaque à buse 5 peut être identique ou différent de celui de la buse 1, par exemple en inox. La plaque à buse 5 peut selon les variantes être traitée chimiquement ou physiquement ou recouverte d'un revêtement pour lui conférer des propriétés spécifiques, notamment pour que la gouttelette 3 soit correctement formée et bien éjectée sans mouiller la plaque à buse.

Avantageusement, la surface de la buse en contact avec la composition à imprimer peut être traitée chimiquement ou physiquement ou recouverte d'un revêtement pour lui conférer des propriétés spécifiques. Notamment, il est avantageux que l'extrémité de la buse facilite la formation de la gouttelette et facilite son éjection en évitant le mouillage de l'extrémité de la buse.

Le dépôt de la composition à imprimer est réalisé au travers de la buse ce qui signifie que la buse est traversante et la composition s'écoule dans la lumière de la buse.

Le procédé selon l'invention peut mettre en œuvre une ou plusieurs buses, similaires ou différentes selon les besoins de l'impression, comprenant un ou plusieurs orifices de tailles similaires ou différentes.

Au sens de la présente invention, un revêtement thermostable est un revêtement résistant à au moins 200°C.

Le liant de la composition à imprimer par impression digitale comprend au moins l'un d'une résine d'accroche, d'une résine fluorocarbonée, d'une composition sol-gel, d'une barbotine de fritte d'émail, d'une laque, d'un tanin condensé.

Avantageusement, ledit liant peut comprendre une résine fluorocarbonée et au moins une résine d'accroche et/ou au moins un tanin condensé.

La résine fluorocarbonée peut être choisie dans le groupe comprenant le polytétrafluoroéthylène (PTFE), les copolymères de tétrafluoroéthylène et de perfluorométhylvinyléther (tels que le MFA), les copolymères de tétrafluoroéthylène et de perfluoropropylvinyléther (tels que le PFA), les copolymères de tétrafluoroéthylène et d'hexafluoropropylène (tels que le FEP) et leurs mélanges.

La résine d'accroche peut être choisie dans le groupe comprenant les polyéthercétones (PEK), les polyétheréthercétones (PEEK), les polyamides imides (PAI), les polyéthers imides (PEI), les polyimides (PI), les polyéthersulfones (PES), les sulfures de polyphénylène (PPS).

Le tanin condensé peut avoir pour motif de base une ou plusieurs unité(s) monomère(s) flavan-3-ols et/ou flavan-3,4-diols et/ou phlorotanins.

Avantageusement, ledit liant peut comprendre un tanin condensé, de préférence ayant pour motif de base une ou plusieurs unité(s) monomère(s) flavan-3-ols et/ou flavan-3,4-diols et/ou phlorotanins.

Avantageusement, ledit liant peut comprendre une composition sol-gel obtenue par hydrolyse d'un précurseur sol-gel de type alcoxyde métallique, par introduction d'eau et d'un catalyseur acide ou basique, puis par condensation.

Le précurseur sol-gel de type alcoxyde métallique peut être choisi dans le groupe comprenant les composés suivants :

- les précurseurs répondant à la formule générale $M_1(OR_1)_n$,
- les précurseurs répondant à la formule générale $M_2(OR_2)_{(n-1)}R_2'$, et
- les précurseurs répondant à la formule générale $M_3(OR_3)_{(n-2)}(R_3')_2$, avec :

  - $R_1$, $R_2$, $R_3$ ou $R_3'$ désignant un groupement alkyle,
  - $R_2'$ désignant un groupement alkyle éventuellement fonctionnalisé ou un groupement phényle éventuellement fonctionnalisé,
  - n étant un nombre entier correspondant à la valence maximale des $M_1$, $M_2$ ou $M_3$,

$M_1$ $M_2$ ou $M_3$ désignant un élément choisi parmi Si, Zr, Ti, Sn, Al, Ce, V, Nb, Hf, Mg ou les lanthanides (Ln).

De préférence, le précurseur sol-gel de type alcoxyde métallique est un alcoxysilane, qui peut être choisi dans le groupe comprenant le méthyltriméthoxysilane (MTMS), le méthyltriéthoxysilane (MTES), le tétraéthoxysilane (TEOS), le tétraméthoxysilane (TMOS), et le 3-glycidoxypropyltriméthoxysilane (GLYMO), l'aminopropyl-triéthoxysilane (APTES) et leurs mélanges.

Avantageusement, ledit liant peut comprendre une barbotine aqueuse de fritte d'émail qui peut comprendre majoritairement de l'oxyde de silicium et de l'oxyde de titane, mélangés à des fondants choisis parmi les oxydes de fer, les oxydes de vanadium, les oxydes de bore, les oxydes de sodium, les oxydes de potassium.

Avantageusement, ledit liant peut comprendre une laque qui peut être choisie parmi les laques silicone, polyester, silicone-polyester.

La composition à imprimer par impression digitale peut avantageusement comprendre en outre des charges fonctionnelles. Par charges fonctionnelles, on entend, au sens de la présente invention, des charges que l'on retrouve sous leur forme initiale à la fin du procédé de fabrication de l'article.

De manière avantageuse, les charges fonctionnelles peuvent avoir une taille moyenne supérieure ou égale à 10 nm et inférieure ou égale à 300 $\mu$m, et de préférence supérieure ou égale à 10 nm et inférieure ou égale à 100 $\mu$m.

De telles charges fonctionnelles peuvent être des pigments, des particules anisotropes (ou paillettes), des charges de renfort, des charges favorisant l'adhérence (comme par exemple de la silice colloïdale), des charges antibactériennes (comme par exemple une dispersion d'argent).

A titre de charges de renfort utilisables dans le cadre de la présente invention, on peut notamment citer des charges microniques ou sub-microniques, sous forme de poudre ou de dispersion, comprenant l'un au moins du $SiO_2$, de l'$Al_2O_3$, du $TiO_2$, du SiC, du diamant, du nitrure de bore, des oxydes de terres rares, tel que le $CeO_2$, du talc, du kaolin, de la baryte, de la wollastonite, de la poudre de PTFE et leurs mélanges.

A titre de pigments utilisables dans le cadre de la présente invention, on peut notamment citer les pigments thermostables organiques ou inorganiques, les sels métalliques, les pigments semi-conducteurs thermochromes et leurs mélanges. Les pigments peuvent être indépendamment choisis parmi le dioxyde de titane, les spinelles, les oxydes de fer, le rouge de pérylène, le violet dioxazine, les oxydes mixtes d'aluminium et de cobalt (tels que l'aluminate de cobalt ($CoAl_2O_4$)), le noir de carbone, les oxydes de chrome et les oxydes de cuivre, le titanate de chrome, l'antimoine, le titanate de nickel, les silico-aluminates, les pigments inorganiques à structure cristalline en spinelle à base de différents oxydes de métaux, les pigments semi-conducteurs thermochromes (par exemple des oxydes métalliques semi-conducteurs tels que Fe2O3, Bi2O3, ou BiVO4...) et leurs mélanges.

Les particules anisotropes utilisables dans le cadre de la présente invention sont des particules dont les dimensions caractéristiques ne sont pas identiques dans toutes les directions, comme par exemple des fibres (de forme essentiellement unidimensionnelle) ou des paillettes (de forme essentiellement bidimensionnelle ou plate). Les paillettes utilisables dans le cadre de la présente invention peuvent être indépendamment choisies parmi les paillettes de mica, enrobées ou non, les paillettes de silice, enrobées ou non, les paillettes d'aluminium, enrobées (notamment d'oxyde de fer) ou non, les paillettes d'oxyde de fer, enrobées ou non, les paillettes de mica ou de silice enrobées de dioxyde de titane ou d'oxyde de fer. Les paillettes utilisables dans le cadre de la présente invention peuvent être traitées pour donner un effet de couleur particulier.

Les particules anisotropes utilisables dans le cadre de la présente invention peuvent par exemple être magnétisables ou électrisables. Dans le cadre de la présente invention, les particules magnétisables peuvent être avantageusement des particules comprenant au moins un métal ferromagnétique. Ces particules magnétisables peuvent être de nature homogène, c'est-à-dire constituées du même matériau, ou de nature composite, c'est-à-dire que ces particules magnétisables ont une structure cœur-enveloppe, dans laquelle le métal ferromagnétique se trouve dans le cœur et/ou dans l'enveloppe desdites particules. A titre d'exemples de particules magnétisables composites, on peut notamment citer des paillettes de mica enrobées d'oxyde de fer $Fe_2O_3$ ou des fibres d'acier inoxydable enrobées d'un matériau sol-gel, comme protection vis-à-vis de la corrosion lors des étapes de mise en œuvre du revêtement, ou encore des paillettes en matériau plastique enrobées d'oxyde de fer $Fe_2O_3$, ou des paillettes dont le cœur est en métal ferromagnétique et l'enveloppe est formée d'un matériau plastique ou d'un matériau sol-gel.

L'application du revêtement thermostable par impression par le procédé jet d'encre peut se faire sur le substrat à plat ou bien sur le substrat en forme ou bien sur une zone localement plate du substrat en forme. Il est obtenu une couche de revêtement thermostable. Généralement, cette couche de revêtement thermostable est humide.

Par couche humide, il est entendu au sens de la présente invention la couche formée par les gouttelettes une fois déposée sur le substrat ; généralement la couche humide comprend tout ou partie de ses solvants. La couche humide est aussi appelée couche humide imprimée. La couche humide est généralement obtenue juste après impression de la couche de revêtement thermostable comprenant la composition comprenant au moins un liant.

Avantageusement, la couche imprimée par impression digitale a une épaisseur supérieure à 0,1 $\mu$m et inférieure ou égale à 1000 $\mu$m, et de préférence supérieure ou égale à 1 $\mu$m et inférieure ou égale à 200 $\mu$m.

De préférence, tout ou partie des solvants de la couche humide sont éliminés, soit naturellement soit par un traitement physique par exemple par séchage thermique, par séchage par flux d'air ou par traitement sous-vide.

Selon une variante du procédé selon l'invention, l'application du revêtement thermostable par impression par le procédé jet d'encre peut se faire en plusieurs couches. Dans ce cas, le dépôt sur au moins une des deux faces opposées dudit substrat d'au moins une couche d'une composition comprenant au moins un liant est répété plusieurs fois. Dans ce cas, le revêtement thermostable est multicouche. C'est chaque couche qui est réalisée de préférence en une seule étape d'impression, le tout formant une multicouche. De préférence selon cette variante, une étape de séchage est réalisée entre l'application de chaque couche, puis la cuisson dudit substrat revêtu est réalisée après application de la dernière couche.

Par cuisson du substrat revêtu, on entend, au sens de la présente invention, un traitement thermique qui permet de densifier la ou les couches de revêtement thermostable appliquées sur le substrat, ce traitement thermique de densification étant réalisé

- à une température supérieure à 150°C lorsque lesdites couches sont obtenues à partir de compositions dont le liant comprend un sol-gel et/ou une laque,
- à une température supérieure à 200°C lorsque lesdites couches sont obtenues à partir de compositions dont le liant comprend un tanin condensé,

- à une température supérieure à 300°C lorsque lesdites couches sont obtenues à partir de compositions dont le liant comprend une résine fluorocarbonée, et
- à une température supérieure à 500°C lorsque lesdites couches sont obtenues à partir de compositions dont le liant comprend une barbotine aqueuse de fritte d'émail.

Le procédé selon la présente invention peut comprendre en outre une étape de traitement de surface du substrat avant l'étape d'obtention du revêtement thermostable.

Avantageusement, la face du substrat sur laquelle va être appliqué le revêtement thermostable peut être traitée de façon à augmenter sa surface spécifique ; pour un substrat en aluminium, ce traitement peut être fait par anodisation (création d'une structure tubulaire d'alumine), par attaque chimique, par sablage, par brossage, par grenaillage ou par ajout de matière par le biais d'une technologie telle que la projection thermique (flamme, plasma ou arc spray). Les autres substrats métalliques peuvent également être polis, sablés, brossés, microbillés ou recevoir un ajout de matière par le biais d'une technologie telle que la projection thermique (flamme, plasma ou arc spray).

Le revêtement thermostable déposé par le procédé de la présente invention peut éventuellement comprendre en outre au moins un décor et/ou au moins une autre couche, telle qu'une sous-couche, une couche de primaire ou une couche de protection. Dans ce cas, le procédé selon l'invention comprend en outre le dépôt d'une ou plusieurs autres couches et/ou décors. Ces couches peuvent être appliquées par impression digitale selon le procédé de la présente invention ou bien par toute autre technique appropriée connue de l'homme du métier, telle que par exemple par pulvérisation, au rideau, au rouleau, par tampographie, par sérigraphie... Ces décors peuvent être appliqués par impression digitale ou bien par toute autre technique appropriée connue de l'homme du métier, telle que par exemple par pulvérisation, au rideau, au rouleau, par tampographie, par sérigraphie...

Selon un aspect de l'invention, le revêtement thermostable, après cuisson du substrat revêtu, présente une épaisseur supérieure à 0,1 $\mu$m et inférieure ou égale à 1000 $\mu$m, et de préférence supérieure ou égale à 1 $\mu$m et inférieure ou égale à 200 $\mu$m.

On peut envisager différents types d'articles de petit équipement ménager chauffants conformes à la présente invention, de différentes formes et réalisés dans différents matériaux.

Ainsi, le substrat peut être choisi selon les conditions d'usage et de traitement thermique nécessaires parmi les substrats en matériau métallique, les substrats en verre, les substrats en céramique, les substrats en terre cuite, les substrats en plastique.

A titre de substrats métalliques utilisables dans la présente invention, on peut avantageusement citer les substrats en aluminium anodisé ou non, éventuellement poli, brossé, sablé, grenaillé ou microbillé, les substrats en alliage d'aluminium anodisé ou non, éventuellement poli, brossé, sablé ou microbillé, les substrats en acier éventuellement poli, brossé, sablé, grenaillé ou microbillé, les substrats en acier inoxydable éventuellement poli, brossé, sablé ou microbillé, les substrats en fonte d'acier, d'aluminium ou de fer, les substrats en cuivre éventuellement martelé ou poli.

Avantageusement, le substrat peut être choisi parmi les substrats comprenant les couches acier inoxydable ferritique/aluminium/acier inoxydable austénitique, les substrats comprenant les couches acier inoxydable/aluminium/cuivre/aluminium/acier inoxydable austénitique, les calottes en aluminium de fonderie, en aluminium ou en alliages d'aluminium doublées d'un fond extérieur en acier inoxydable, les substrats colaminés métalliques, par exemples les substrats colaminés bicouches comprenant une couche en acier inoxydable (par exemple destinée à constituer la face intérieure de l'article) et une couche en aluminium ou en alliage d'aluminium, anodisé ou non (par exemple destinée à constituer la face extérieure de l'article).

L'article de petit équipement ménager chauffant selon la présente invention peut notamment être un article culinaire ou un article de petit électroménager tel qu'un fer à repasser, un article pour le soin du cheveu, un pot isotherme (par exemple pour cafetière) ou un bol mixeur.

L'article de petit équipement ménager chauffant selon la présente invention peut notamment être un article culinaire, et en particulier un article culinaire dont l'une des deux faces opposées du substrat est une face intérieure, éventuellement concave, destinée à être disposée du côté d'aliments susceptibles d'être introduits dans ou sur ledit article, et dont l'autre face du substrat est une face extérieure, éventuellement convexe, destinée à être disposée vers une source de chaleur.

A titre d'exemples non limitatifs d'articles culinaires conformes à la présente invention, on citera notamment des articles culinaires tels que les casseroles et les poêles, les woks et les sauteuses, les fait-tout et les marmites, les crêpières, les gaufriers, les grills, les moules et plaques pour la pâtisserie, les planchas, les plaques et grilles de barbecue, les appareils à raclette ou à fondue, les cuiseurs à riz, les confituriers, les cuves de machines à pain, les bols de préparation.

L'article de petit équipement ménager chauffant selon la présente invention peut notamment être un fer à repasser, tel qu'un fer à vapeur ou une centrale vapeur, et le substrat revêtu selon la présente invention est la semelle du fer à repasser.

L'article de petit équipement ménager chauffant selon la présente invention peut notamment être un article pour le soin du cheveu, tel qu'un fer à friser ou fer à lisser, et le substrat revêtu selon la présente invention est une des plaques chauffantes de l'article pour le soin du cheveu.

Les avantages du procédé selon l'invention sont les suivants :

* *en termes de performance produit:* la maitrise de l'homogénéité du revêtement de façon globale (notamment dans son épaisseur), la maitrise de la localisation du dépôt, l'absence d'aspect de tramage et la possibilité de réaliser à la fois des dépôts de faible épaisseur (environ 1 micron - difficilement réalisable par les autres techniques classiques d'enduction) et de forte épaisseur (plusieurs microns).

* *en termes de procédé :*

**l'absence ou la réduction drastique de perte de matière : ajustement de la quantité d'encre aux besoins de l'impression, pas de phénomène d'overspray ou de débordement de pulvérisation, nettoyage facilité,

**l'absence de besoins de formes imprimantes, comme par exemple des rouleaux, des cylindres d'encrage, des écrans, des clichés, des cylindres porte-cl ichés,

**la limitation du besoin en étapes de séchage inter-couches, en effet le dépôt sans contact permet un dépôt sur une couche précédente encore non séchée,

**la possibilité de changement de série immédiat, en effet pas besoin d'installer de forme imprimante spécifique, le changement de série ne nécessite qu'un chargement de fichier informatique

**la possibilité de cadences très importantes,

**l'absence de contact avec la machine imprimante,

**le faible besoin de main d'œuvre,

**l'impression se fait de façon continue de l'ordinateur au tirage d'impression, sans interruption du flux numérique,

**les paramètres d'impression peuvent être modifiés à chaque article imprimé, sans interrompre le procédé permettant ainsi de faire varier les épaisseurs des couches ou les décors ;

* en termes de sécurité et environnement : l'utilisation d'un circuit fluidique entièrement fermé, permettant l'absence de contact entre l'imprimante et l'opérateur et la possibilité de traçabilité en production.

L'invention est illustrée plus en détail dans les exemples suivants.

## EXEMPLES

### Tests

Détermination de l'extrait sec d'une composition

### PRINCIPE

L'extrait sec d'un produit est la partie solide résiduelle restant après évaporation des matières volatiles qu'il contient. La température et la durée de séchage jouent un grand rôle car les solvants à point d'ébullition élevé, les fractions de monomères, les diluants réactifs et les sous-produits de réaction (selon leur degré de rétention) quittent très lentement le film en formation. Il est donc très important de définir de façon très conventionnelle des conditions de séchage normalisées, aussi proches que possible de la pratique.

### MODE OPERATOIRE

Pour mesurer cet extrait sec, on procède de la manière suivante :

- on pèse une coupelle en aluminium : $m_0$ = masse de la coupelle ;
- on dispose entre 0,5 g et 3 g de produit à étudier dans cette coupelle ;
- on pèse la coupelle remplie : $m_1$ = masse de la coupelle remplie ;
- on place la coupelle dans une étuve à 210°C pendant deux heures ;
- après étuvage et après refroidissement, on pèse la coupelle :

$$m_2 = \text{masse de la coupelle remplie après étuvage et refroidissement ;}$$

- l'extrait sec est donné par la formule ci-dessous :

$$\text{Extrait sec} = 100*[(m_2-m_0)/(m_1-m_0)]$$

Les exemples 1 à 14 sont des exemples selon l'invention. Les exemples comparatifs 1 et 2 ne sont pas des exemples selon l'invention.

**Exemple 1 : substrat avec revêtements antiadhésifs et décor à base de résine fluorocarbonée**

Le substrat est un disque d'aluminium décapé chimiquement.

Un revêtement à base de résine fluorocarbonée, de résine d'accroché et de charges minérales de renfort est appliqué par sérigraphie en couches successives sur la première face du disque.

L'ensemble est précuit à une température de 350°C.

La seconde face du disque reçoit par sérigraphie une sous-couche de composition de couleur blanche et à base de résine fluorocarbonée.

Un décor photo-réaliste est réalisé en imprimant une composition de décor, à base de pigments colorés particulaires et exempte de liant, par procédé jet d'encre par un système d'impression équipé de têtes d'impression Drop-On-Demand standard, du type Xaar 1001, dont les buses ont un orifice d'environ 1 $\mu$m, à une résolution de 360 DPI sur la sous-couche blanche. Le décor humide ainsi obtenu présente une épaisseur comprise entre 0,5 $\mu$m et 5 $\mu$m.

Une couche de protection incolore est réalisée, sur le décor et la sous-couche blanche, en imprimant une composition comprenant une dispersion de PTFE, des solvants et des additifs classiques. Ladite composition a un extrait sec d'environ 50-55 % en poids. Cette composition est déposée grâce à une machine d'impression digitale équipée de têtes d'impression de technologie valve-jet dont les buses ont un orifice de 100 $\mu$m. La couche humide ainsi déposée présente une épaisseur d'environ 20 $\mu$m.

Le disque enduit sur ses deux faces est cuit à 430°C pendant 10 minutes.

Le revêtement cuit ainsi obtenu sur la seconde face du disque a une épaisseur d'environ 30 $\mu$m.

**Exemple 2 : substrat avec revêtements antiadhésifs et décor à base de résine fluorocarbonée**

Le substrat est un disque d'aluminium décapé chimiquement.

Un revêtement à base de résine fluorocarbonée, de résine d'accroché et de charges minérales de renfort est appliqué par sérigraphie en couches successives sur la première face du disque.

L'ensemble est précuit à une température de 350°C.

La seconde face du disque reçoit par sérigraphie une sous-couche de composition de couleur blanche et à base de résine fluorocarbonée.

Un décor photo-réaliste est réalisé en imprimant une composition de décor, à base de pigments colorés particulaires et exempte de liant, par procédé jet d'encre par un système d'impression digitale, équipé de têtes d'impression Drop-On-Demand standard, du type Xaar 1001, dont les buses ont un orifice d'environ 1 $\mu$m, à une résolution de 360 DPI sur la sous-couche blanche. Le décor humide ainsi obtenu présente une épaisseur comprise entre 0,5 $\mu$m et 5 $\mu$m.

Une couche de protection incolore est réalisée, sur le décor et la sous-couche blanche, en imprimant une composition comprenant une dispersion de PTFE, des solvants, des additifs classiques et des paillettes dont la plus grande dimension caractéristique est d'environ 100 $\mu$m. Ladite composition a un extrait sec d'environ 50-55 % en poids. Cette composition est déposée grâce à une machine d'impression digitale équipée de têtes d'impression de technologie valve-jet dont les buses ont un orifice de 200 $\mu$m. La couche humide ainsi déposée présente une épaisseur d'environ 20 $\mu$m.

Le disque enduit sur ses deux faces est cuit à 430°C pendant 10 minutes.

Le revêtement cuit ainsi obtenu sur la seconde face du disque a une épaisseur d'environ 30 $\mu$m.

**Exemple 3 : substrat avec un revêtement antiadhésif à base de résine fluorocarbonée**

Le substrat est un disque d'aluminium décapé chimiquement.

Une composition de primaire, à base d'un mélange de dispersions de PTFE et de PFA, d'une résine d'accroché (PAI), de silice colloïdale et de dispersion de noir de carbone, est appliquée par impression digitale sur une des faces du disque. Ladite composition de primaire a un extrait sec d'environ 20-25 % en poids.

L'impression digitale est réalisée grâce à une machine d'impression digitale par le procédé jet d'encre, la machine étant équipée de têtes d'impression de technologie valve-jet dont les buses ont un orifice de 100 $\mu$m. La couche humide ainsi déposée présente une épaisseur d'environ 30 $\mu$m.

La couche de primaire est séchée à environ 100°C.

Une couche de protection incolore est ensuite réalisée sur la couche de primaire. Une composition de protection incolore à base d'une dispersion de PTFE, de solvant et d'additifs classiques est déposée grâce à une machine d'impression digitale par le procédé jet d'encre, la machine étant équipée de têtes d'impression de technologie valve-jet dont les buses ont un orifice de 100 $\mu$m. Ladite composition de protection a un extrait sec d'environ 50-55 % en poids. La couche humide ainsi déposée présente une épaisseur d'environ 20 $\mu$m.

Le disque ainsi enduit est cuit à 430°C pendant 10 minutes.

Le revêtement cuit ainsi obtenu a une épaisseur d'environ 30 $\mu$m.

**Exemple 4 : substrat avec un revêtement antiadhésif à base de résine fluorocarbonée**

Le substrat est un disque d'aluminium décapé chimiquement.

Une composition de primaire, à base d'un mélange de dispersions de PTFE et de PFA, d'une résine d'accroché (PAI), de silice colloïdale, de charges minérales de renfort (alumine en poudre de taille de particules de 3-50 $\mu$m) et de dispersion de noir de carbone, est appliquée par impression digitale sur une des faces du disque. Ladite composition de primaire a un extrait sec d'environ 20-25 % en poids.

L'impression digitale est réalisée grâce à une machine d'impression digitale par le procédé jet d'encre, la machine étant équipée de têtes d'impression de technologie valve-jet dont les buses ont un orifice de 150 $\mu$m. La couche humide ainsi déposée présente une épaisseur d'environ 30 $\mu$m.

La couche de primaire est séchée à environ 100°C.

Une couche de protection incolore est ensuite réalisée sur la couche de primaire. Une composition de protection incolore à base d'une dispersion de PTFE, de solvant et d'additifs classiques est déposée grâce à une machine d'impression digitale par le procédé jet d'encre, la machine étant équipée de têtes d'impression de technologie valve-jet dont les buses ont un orifice de 100 $\mu$m. Ladite composition de protection a un extrait sec d'environ 50-55 % en poids. La couche humide ainsi déposée présente une épaisseur d'environ 20 $\mu$m.

Le disque ainsi enduit est cuit à 430°C pendant 10 minutes.

Le revêtement cuit ainsi obtenu a une épaisseur d'environ 30 $\mu$m.

**Exemple 5 : substrat avec un revêtement antiadhésif à base de résine fluorocarbonée**

Le substrat est un disque d'aluminium décapé chimiquement.

Une composition de primaire, à base d'un mélange de dispersions de PTFE et de PFA, d'une résine d'accroché (PAI), de silice colloïdale, de charges minérales de renfort (alumine en poudre de taille de particules de 3-50 $\mu$m) et de dispersion de noir de carbone, est appliquée par impression digitale sur une des faces du disque. Ladite composition de primaire a un extrait sec d'environ 20-25 % en poids.

L'impression digitale est réalisée grâce à une machine d'impression digitale par le procédé jet d'encre, la machine étant équipée de têtes d'impression de technologie valve-jet dont les buses ont un orifice de 150 $\mu$m. La couche humide ainsi déposée présente une épaisseur d'environ 30 $\mu$m.

La couche de primaire est séchée à environ 100°C.

Les compositions suivantes sont déposées successivement par impression digitale sur la couche de primaire :

- une composition de décor thermostable de couleur rouge à base d'une dispersion de PTFE et d'un mélange de rouge de pérylène et de pigment noir. Ladite composition a un extrait sec d'environ 50 % en poids. L'impression de cette composition est réalisée, en suivant une forme de disque plein, grâce à une machine d'impression digitale par le procédé jet d'encre, la machine étant équipée de têtes d'impression de technologie valve-jet dont les buses ont un orifice de 100 $\mu$m. La couche de décor humide ainsi déposée présente une épaisseur d'environ 5 $\mu$m;

- une composition de décor thermochrome de couleur rouge à base d'une dispersion de PTFE et d'oxyde de fer. Ladite composition a un extrait sec d'environ 50 % en poids. L'impression de cette composition est réalisée, en suivant un motif discontinu recouvrant au moins partiellement la couche de décor thermostable rouge, grâce à une machine d'impression digitale par le procédé jet d'encre, la machine étant équipée de têtes d'impression de technologie valve-jet dont les buses ont un orifice de 100 $\mu$m. La couche de décor humide ainsi déposée présente une épaisseur d'environ 5 $\mu$m ;

- une composition de décor de couleur nettement distincte de la couleur de la couche de primaire, exempte de liant et comprenant des paillettes dont la plus grande dimension caractéristique est d'environ 100 $\mu$m. Ladite composition a un extrait sec d'environ 20 % en poids. L'impression de cette composition est réalisée, en suivant un motif discontinu recouvrant au moins partiellement les couches de décor rouges, grâce à une machine d'impression équipée de têtes d'impression de technologie valve-jet dont les buses ont un orifice de 200 $\mu$m. La couche de décor humide ainsi déposée a une épaisseur d'environ 5 $\mu$m.

Une couche de protection incolore est réalisé, sur la couche de primaire et les couches de décor, en imprimant une composition comprenant une dispersion de PTFE, des solvants, des additifs classiques et des paillettes dont la plus grande dimension caractéristique est d'environ 100 $\mu$m. Ladite composition a un extrait sec d'environ 50-55 % en poids. Cette composition est déposée grâce à une machine d'impression digitale par le procédé jet d'encre, la machine étant équipée de têtes d'impression de technologie valve-jet dont les buses ont un orifice de 200 $\mu$m. La couche humide ainsi déposée présente une épaisseur d'environ 20 $\mu$m.

Le disque ainsi enduit est cuit à 430°C pendant 10 minutes.

Le revêtement cuit ainsi obtenu a une épaisseur d'environ 35 $\mu$m.

**Exemple 6 : substrat avec un revêtement antiadhésif à base de résine fluorocarbonée**

Le substrat est un disque d'aluminium décapé chimiquement.

Une composition, à base d'un mélange de dispersions de PTFE et de PFA et d'une dispersion pigmentaire de bleu de cobalt ayant des particules d'environ 5 $\mu$m, est appliquée par impression digitale sur une des faces du disque. Ladite composition de primaire a un extrait sec d'environ 40 % en poids.

L'impression digitale est réalisée grâce à une machine d'impression digitale par le procédé jet d'encre, la machine étant équipée de têtes d'impression de technologie valve-jet dont les buses ont un orifice de 100 $\mu$m. La couche humide ainsi déposée présente une épaisseur d'environ 30 $\mu$m.

Le disque ainsi enduit est cuit à 430°C pendant 10 minutes.

Le revêtement cuit ainsi obtenu a une épaisseur d'environ 15-20 $\mu$m.

**Exemple 7 : calotte avec un revêtement antiadhésif présentant une résistance à la rayure améliorée**

A partir d'un disque d'aluminium, une presse permet d'obtenir une forme de calotte.

Sur le fond de la partie concave de la calotte, une couche discontinue d'une composition à base de barbotine de fritte d'émail et de charges inorganiques de renfort (alumine en poudre de taille de particules d'environ 25 $\mu$m) est déposée grâce à une machine d'impression digitale par le procédé jet d'encre, la machine étant équipée de têtes d'impression de technologie valve-jet dont les buses ont un orifice de 400 $\mu$m. Ladite composition a un extrait sec d'environ 65 % en poids. La couche discontinue humide ainsi obtenue a une épaisseur d'environ 20 $\mu$m.

La calotte ainsi revêtue est cuite à 560°C pendant 10 minutes.

Sur l'ensemble de la partie concave de la calotte, plusieurs couches successives à base de PTFE sont appliquées par pulvérisation.

La calotte ainsi revêtue est ensuite cuite à 430°C pendant 10 minutes.

Le revêtement cuit obtenu a une épaisseur d'environ 35 $\mu$m.

**Exemple 8 : substrat avec un revêtement facile à nettoyer de type laque**

Le substrat est un disque d'aluminium décapé chimiquement.

Une des faces du substrat est revêtue d'une couche d'une composition à base de laque silicone-polyester grâce à une machine d'impression digitale par le procédé jet d'encre, la machine étant équipée de têtes d'impression de technologie valve-jet dont les buses ont un orifice de 100 $\mu$m. Ladite composition comprend de la laque silicone-polyester, des pigments et des solvants, et a un extrait sec d'environ 50 % en poids. La couche humide ainsi déposée a une épaisseur d'environ 20 $\mu$m.

Le disque ainsi revêtu est cuit à 250°C pendant 10 minutes.

Le revêtement cuit obtenu a une épaisseur d'environ 10 $\mu$m.

**Exemple 9 : calotte avec un revêtement de protection anti-rayure**

A partir d'un disque d'aluminium, une presse permet d'obtenir une forme de calotte.

Sur le fond de la partie convexe de la calotte, une couche d'une composition à base de barbotine de fritte d'émail contenant des billes d'inox d'environ 45 $\mu$m est déposée grâce à une machine d'impression digitale par le procédé jet d'encre, la machine étant équipée de têtes d'impression de technologie valve-jet dont les buses ont un orifice de 200 $\mu$m. Ces billes d'inox sont sélectionnées de façon à former une protubérance et rester en contact direct avec la surface de chauffe une fois le revêtement cuit. Ladite composition a un extrait sec de 70 % en poids.

La couche humide ainsi déposée a une épaisseur d'environ 50 $\mu$m.

La calotte est ensuite cuite à 560°C pendant 10 minutes.

Le revêtement cuit finalement obtenu a une épaisseur d'environ 30 $\mu$m avec le sommet de billes d'inox apparent.

**Exemple 10 : calotte avec un revêtement de protection anti-rayure**

A partir d'un disque d'aluminium, une presse permet d'obtenir une forme de calotte.

Sur le fond de la partie convexe de la calotte, une couche d'une composition colorée à base de précurseurs de type silane contenant des billes d'inox d'environ 45 $\mu$m est déposée grâce à une machine d'impression digitale par le procédé jet d'encre, la machine étant équipée de têtes d'impression de technologie valve-jet dont les buses ont un orifice de 200 $\mu$m. Ces billes d'inox sont sélectionnées de façon à former une protubérance et rester en contact direct avec la surface de chauffe une fois le revêtement cuit. Ladite composition a un extrait sec de 70 % en poids.

La couche humide ainsi déposée a une épaisseur d'environ 50 $\mu$m.

La calotte est ensuite cuite à 250°C pendant 20 minutes.

Le revêtement cuit finalement obtenu a une épaisseur d'environ 30 $\mu$m avec le sommet de billes d'inox apparent.

**Exemple 11 : calotte avec un revêtement antiadhésif à base de sol-gel**

A partir d'un disque d'aluminium, une presse permet d'obtenir une forme de calotte.

Sur toute la face concave de la calotte, une première couche d'une composition colorée à base de précurseurs de type silane est appliquée par pulvérisation.

Sur le fond de la partie concave de la calotte, sont déposées successivement par impression digitale les compositions suivantes :

- une composition de décor thermostable de couleur rouge (mélange de rouge de pérylène et de pigment noir) et exempte de liant. Ladite composition a un extrait sec d'environ 50 % en poids. Cette impression est réalisée, en suivant une forme de disque plein, grâce à une machine d'impression digitale par le procédé jet d'encre, la machine étant équipée de têtes d'impression de technologie valve-jet dont les buses ont un orifice de 100 $\mu$m. La couche de décor humide ainsi déposée présente une épaisseur d'environ 10 $\mu$m ;
- une composition de décor thermochrome de couleur rouge à base d'oxyde de fer et exempte de liant. Ladite composition a un extrait sec d'environ 50 % en poids. Cette impression est réalisée, en suivant un motif discontinu recouvrant au moins partiellement la couche de décor thermostable rouge, grâce à une machine d'impression digitale par le procédé jet d'encre, la machine étant équipée de têtes d'impression de technologie valve-jet dont les buses ont un orifice de 100 $\mu$m. La couche de décor humide ainsi déposée présente une épaisseur d'environ 10 $\mu$m ;
- une composition de décor de couleur nettement distincte de la couleur de la première couche enduite par pulvérisation, exempte de liant et comprenant des paillettes dont la plus grande dimension caractéristique est d'environ 100 $\mu$m. Ladite composition a un extrait sec d'environ 20 % en poids. Cette impression est réalisée, en suivant un motif discontinu recouvrant au moins partiellement les couches de décor rouges, grâce à une machine d'impression digitale par le procédé jet d'encre, la machine étant équipée de têtes d'impression de technologie valve-jet dont les buses ont un orifice de 200 $\mu$m. La couche de décor humide ainsi déposée présente une épaisseur d'environ 10 $\mu$m.

Sur toute la face concave de la calotte, une dernière couche d'une composition incolore à base de précurseurs de type silane est appliquée par pulvérisation.

La calotte est ensuite cuite à 250°C pendant 15 minutes.

Le revêtement cuit ainsi obtenu a une épaisseur d'environ 30 $\mu$m.

**Exemple 12 : substrat avec un revêtement antiadhésif à base de résine fluorocarbonée**

Le substrat est un disque d'aluminium brossé mécaniquement.

Une composition de primaire, à base d'un mélange de dispersions de PTFE et de FEP, d'une résine d'accroché (PAI), de silice colloïdale, de charges minérales de renfort (carbure de silicium de taille de particules de 3-50 $\mu$m) et de dispersion de noir de carbone, est appliquée par impression digitale sur une des faces du disque. Ladite composition de primaire a un extrait sec d'environ 35-40 % en poids.

L'impression digitale est réalisée grâce à une machine d'impression digitale par le procédé jet d'encre, la machine étant équipée de têtes d'impression de technologie telle que décrite dans le brevet US 6,460,980 dont le canal d'éjection possède un diamètre de 500 $\mu$m. La couche humide ainsi déposée présente une épaisseur d'environ 30 $\mu$m.

La couche de primaire est séchée à environ 100°C.

Une couche de protection incolore est réalisée, sur la couche de primaire et les couches de décor, en imprimant une composition comprenant un mélange de dispersions de PTFE, de PFA et de FEP, des solvants, des additifs classiques, des paillettes dont la plus grande dimension caractéristique est d'environ 100 $\mu$m. Ladite composition a un extrait sec d'environ 45-50 % en poids.

Cette composition est déposée grâce à une machine d'impression digitale équipée de têtes d'impression de technologie telle que décrite dans le brevet US 6,460,980 dont le canal d'éjection possède un diamètre de 500 $\mu$m. La couche humide ainsi déposée présente une épaisseur d'environ 30 $\mu$m.

Le disque ainsi enduit est cuit à 430°C pendant 10 minutes.

Le revêtement cuit ainsi obtenu a une épaisseur d'environ 25 $\mu$m.

**Exemple 13 : substrat avec un revêtement antiadhésif à base de résine fluorocarbonée**

Le substrat est un disque d'aluminium brossé mécaniquement.

Une composition de primaire, à base d'un mélange de dispersions de PTFE et de FEP, d'une résine d'accroché (PAI), de silice colloïdale, de charges minérales de renfort (alumine sphérique de taille de particules de 3-50 $\mu$m) et de dispersion de noir de carbone, est appliquée par impression digitale sur une des faces du disque. Ladite composition de primaire a un extrait sec d'environ 35-40 % en poids.

L'impression digitale est réalisée grâce à une machine d'impression équipée de têtes d'impression de technologie telle que décrite dans le brevet WO2010/146473 dont le canal d'éjection possède un diamètre de 120 $\mu$m. La couche humide ainsi déposée présente une épaisseur d'environ 30 $\mu$m.

La couche de primaire est séchée à environ 100°C.

Les compositions suivantes sont déposées successivement par impression digitale sur la couche de primaire :

- une composition de décor thermostable de couleur rouge à base d'une dispersion de PTFE et d'un mélange de rouge de pérylène et de pigment noir. Ladite composition a un extrait sec d'environ 50 % en poids. L'impression de cette composition est réalisée, en suivant une forme de disque plein, grâce à une machine d'impression digitale par le procédé jet d'encre, la machine étant équipée de têtes d'impression de technologie valve-jet dont les buses ont un orifice de 100 $\mu$m. La couche de décor humide ainsi déposée présente une épaisseur d'environ 5 $\mu$m;
- une composition de décor thermochrome de couleur rouge à base d'une dispersion de PTFE et d'oxyde de fer. Ladite composition a un extrait sec d'environ 50 % en poids. L'impression de cette composition est réalisée, en suivant un motif discontinu recouvrant au moins partiellement la couche de décor thermostable rouge, grâce à une machine d'impression digitale par le procédé jet d'encre, la machine étant équipée de têtes d'impression de technologie valve-jet dont les buses ont un orifice de 100 $\mu$m. La couche de décor humide ainsi déposée présente une épaisseur d'environ 5 $\mu$m ;
- une composition de décor de couleur nettement distincte de la couleur de la couche de primaire, exempte de liant et comprenant des paillettes dont la plus grande dimension caractéristique est d'environ 100 $\mu$m et des charges de type alumine sphérique de taille 15-50$\mu$m. Ladite composition a un extrait sec d'environ 20 % en poids. L'impression de cette composition est réalisée, en suivant un motif discontinu recouvrant au moins partiellement les couches de décor rouges, grâce à une machine d'impression digitale par le procédé jet d'encre, la machine étant équipée de têtes d'impression de technologie valve-jet dont les buses ont un orifice de 200 $\mu$m. La couche de décor humide ainsi déposée a une épaisseur d'environ 5 $\mu$m.

Une couche de protection incolore est réalisée, sur la couche de primaire et les couches de décor, en imprimant une composition comprenant un mélange de dispersions de PTFE, de PFA et de FEP, des solvants, des additifs classiques, et des paillettes dont la plus grande dimension caractéristique est d'environ 100 $\mu$m. Ladite composition a un extrait sec d'environ 50-55 % en poids. Cette composition est déposée grâce à une machine d'impression digitale par le procédé jet d'encre, la machine étant équipée de têtes d'impression de technologie valve-jet dont les buses ont un orifice de 200 $\mu$m. La couche humide ainsi déposée présente une épaisseur d'environ 20 $\mu$m.

Le disque ainsi enduit est cuit à 430°C pendant 10 minutes.

Le revêtement cuit ainsi obtenu a une épaisseur d'environ 20 $\mu$m.

**Exemple 14 : substrat avec un revêtement antiadhésif à base de résine fluorocarbonée**

Le substrat est un disque d'aluminium brossé mécaniquement.

Une composition, à base d'un mélange de dispersions de PTFE et de PFA et d'une dispersion pigmentaire, mélange de bleu de cobalt et de vanadate de bismuth, ayant des particules d'environ 5 $\mu$m, est appliquée par impression digitale sur une des faces du disque. Ladite composition de primaire a un extrait sec d'environ 40 % en poids.

L'impression digitale est réalisée grâce à une machine d'impression digitale par le procédé jet d'encre, la machine étant équipée de têtes d'impression de technologie telle que décrite dans le brevet US 6,460,980 dont le canal d'éjection possède un diamètre de 500 $\mu$m. La couche humide ainsi déposée présente une épaisseur d'environ 30 $\mu$m.

La couche de primaire est séchée à environ 100°C.

Une composition de décor de couleur nettement distincte de la couleur de la couche de primaire, à base d'un mélange de dispersions de PTFE et de PFA et d'une dispersion pigmentaire d'oxyde de fer, ayant des particules d'environ

5 μm. Ladite composition a un extrait sec d'environ 40 % en poids. L'impression de cette composition est réalisée, en suivant un motif discontinu recouvrant au moins partiellement la première couche verte, grâce à une machine d'impression équipée de têtes d'impression telle que décrite dans le brevet WO2010/146473 dont le canal d'éjection possède un diamètre de 120 μm. La couche humide ainsi déposée présente une épaisseur d'environ 20 μm.

Le disque ainsi enduit est cuit à 430°C pendant 10 minutes.

Le revêtement cuit ainsi obtenu a une épaisseur d'environ 20 μm et présente un motif décoratif rouge sur fond vert.

**Exemple comparatif 1**

Le substrat est un disque d'aluminium décapé chimiquement.

Un revêtement à base de résine fluorocarbonée, de résine d'accroché et de charges minérales de renfort est appliqué par sérigraphie en couches successives sur la première face du disque.

L'ensemble est précuit à une température de 350°C.

La seconde face du disque reçoit par sérigraphie une sous-couche de composition de couleur blanche et à base de résine fluorocarbonée.

Un décor photo-réaliste est réalisé en imprimant une composition de décor, à base de pigments colorés particulaires et exempte de liant, par jet d'encre par un système d'impression équipé de têtes d'impression Drop-On-Demand standard, du type Xaar 1001, dont les buses ont un orifice d'environ 1 μm, à une résolution de 360 DPI sur la sous-couche blanche. Le décor humide ainsi obtenu présente une épaisseur comprise entre 0,5 μm et 5 μm.

Une couche de protection incolore est réalisée, sur le décor et la sous-couche blanche, en imprimant une composition comprenant une dispersion de PTFE, des solvants et des additifs classiques. Ladite composition a un extrait sec d'environ 10 % en poids. Cette composition est déposée par jet d'encre par un système d'impression digitale équipé de têtes d'impression Drop-On-Demand standard, de type Xaar 1001, dont les buses ont un orifice d'environ 1 μm, à une résolution de 360 DPI. La couche humide ainsi déposée présente une épaisseur d'environ 10 μm.

Cette couche est séchée pendant 1 minute à 100°C. Après sèche, la couche présente une épaisseur d'environ 1 μm.

Pour atteindre une épaisseur finale sèche de couche de protection minimale (soit environ 10 μm) pour assurer une bonne anti-adhésivité du revêtement final, il est alors nécessaire de multiplier l'étape d'impression de la composition de protection incolore suivie d'une sèche au moins 10 fois.

Le disque enduit sur ses deux faces est cuit à 430°C pendant 10 minutes.

Le revêtement cuit ainsi obtenu sur la seconde face du disque a une épaisseur d'environ 30 μm.

Le revêtement final ainsi obtenu est similaire à celui réalisé dans l'exemple 1 mais 10 fois plus d'étapes d'impression et de sèche ont été nécessaires, ce qui n'est pas un procédé industriel raisonnable.

**Exemple comparatif 2**

Le substrat est un disque d'aluminium décapé chimiquement.

Un revêtement à base de résine fluorocarbonée, de résine d'accroché et de charges minérales de renfort est appliqué par sérigraphie en couches successives sur la première face du disque.

L'ensemble est précuit à une température de 350°C.

La seconde face du disque reçoit par sérigraphie une sous-couche de composition de couleur blanche et à base de résine fluorocarbonée.

Un décor photo-réaliste est réalisé en imprimant une composition de décor, à base de pigments colorés particulaires et exempte de liant, par procédé jet d'encre par un système d'impression équipé de têtes d'impression Drop-On-Demand standard, du type Xaar 1001, dont les buses ont un orifice d'environ 1 μm, à une résolution de 360 DPI sur la sous-couche blanche. Le décor humide ainsi obtenu présente une épaisseur comprise entre 0,5 μm et 5 μm.

Une couche de protection incolore est réalisée, sur le décor et la sous-couche blanche, en imprimant une composition comprenant une dispersion de PTFE, des solvants et des additifs classiques. Ladite composition a un extrait sec d'environ 10 % en poids. Cette composition est déposée par procédé jet d'encre par un système d'impression digitale équipé de têtes d'impression Drop-On-Demand standard, de type Xaar 1001, dont les buses ont un orifice d'environ 1 μm, à une résolution de 360 DPI . La couche humide ainsi déposée présente une épaisseur d'environ 10 μm.

Pour atteindre une épaisseur finale sèche de couche de protection minimale (soit environ 10 μm) pour assurer une bonne anti-adhésivité du revêtement final, il est alors nécessaire de multiplier l'étape d'impression de la composition de protection incolore au moins 10 fois.

La couche humide ainsi déposée présente une épaisseur d'environ 100 μm. Une telle couche humide ne permet pas de garder une homogénéité de la répartition des composants.

Le disque enduit sur ses deux faces est cuit à 430°C pendant 10 minutes.

Le revêtement cuit ainsi obtenu sur la seconde face du disque a une épaisseur d'environ 30 $\mu$m.

Le revêtement final ainsi obtenu présente une couche de protection non homogène, les surépaisseurs formées sont très jaunes et craquelées et des zones de très faibles épaisseurs existent et présentent une anti-adhésivité insuffisante.

## Revendications

1. Procédé de fabrication d'un article de petit équipement ménager chauffant comprenant un substrat ayant au moins deux faces opposées, le procédé comprenant :

   - la fourniture dudit substrat ; et
   - l'obtention d'un revêtement thermostable sur ledit substrat, ladite obtention comprenant :

     • le dépôt sur au moins une des deux faces opposées dudit substrat d'au moins une couche d'une composition comprenant au moins un liant ; et
     • la cuisson dudit substrat revêtu,

   **caractérisé en ce que** la composition comprenant au moins un liant présente un extrait sec supérieur ou égal à 15 % en poids, et
   **en ce que** ledit dépôt est réalisé par impression digitale au travers d'au moins une buse ayant un orifice d'une taille supérieure ou égale à 100 $\mu$m.

2. Procédé selon la revendication 1, dans lequel ladite composition présente un extrait sec supérieur ou égal à 20 % en poids.

3. Procédé selon l'une quelconque des revendications précédentes, dans lequel le liant comprend au moins l'un d'une résine d'accroche, d'une résine fluorocarbonée, d'une composition sol-gel, d'une barbotine de fritte d'émail, d'une laque, d'un tanin condensé.

4. Procédé selon l'une quelconque des revendications précédentes, dans lequel le substrat est choisi parmi les substrats en matériau métallique, les substrats en verre, les substrats en céramique, les substrats en terre cuite, les substrats en plastique.

5. Procédé selon l'une quelconque des revendications précédentes, dans lequel l'article de petit équipement ménager chauffant est un article culinaire ou un article de petit électroménager.

6. Procédé selon l'une quelconque des revendications précédentes, dans lequel l'orifice de la buse a une taille inférieure ou égale à 1,5 mm.

7. Procédé selon l'une quelconque des revendications précédentes, dans lequel la composition comprend en outre des charges fonctionnelles.

8. Procédé selon l'une quelconque des revendications précédentes, dans lequel la couche humide imprimée par impression digitale a une épaisseur supérieure à 0,1 $\mu$m et inférieure ou égale à 1000 $\mu$m.

9. Procédé selon l'une quelconque des revendications précédentes, dans lequel le revêtement thermostable cuit a une épaisseur supérieure à 0,1 $\mu$m et inférieure ou égale à 1000 $\mu$m.

10. Procédé selon l'une quelconque des revendications précédentes, dans lequel le revêtement thermostable comprend en outre au moins un décor et/ou au moins une autre couche, telle qu'une sous-couche, une couche de primaire ou une couche de protection.

11. Procédé selon l'une quelconque des revendications précédentes **caractérisé en ce que** ledit dépôt est réalisé par impression digitale par le procédé jet d'encre.

**Patentansprüche**

1. Verfahren zur Herstellung eines beheizbaren Haushalts-Kleingeräteartikels, umfassend ein Substrat mit mindestens zwei gegenüberliegenden Seiten, wobei das Verfahren umfasst:

   - Bereitstellung des Substrats; und
   - Erhalten einer thermostabilen Beschichtung auf diesem Substrat, wobei das Erhalten umfasst:

     • Aufbringen auf mindestens einer der beiden gegenüberliegenden Seiten des Substrats von mindestens einer Schicht einer Zusammensetzung, die mindestens ein Bindemittel umfasst; und
     • Brennen des beschichteten Substrats,

   **dadurch gekennzeichnet, dass** die Zusammensetzung, die mindestens ein Bindemittel umfasst, einen Trockenextrakt von 15 Gew.-% oder mehr aufweist, und
   dass das Aufbringen durch Digitaldruck durch mindestens eine Düse mit einer Öffnung in einer Größe von 100 $\mu$m oder mehr erfolgt.

2. Verfahren nach Anspruch 1, wobei die Zusammensetzung einen Trockenextrakt von 20 Gew.-% oder mehr aufweist.

3. Verfahren nach einem der vorstehenden Ansprüche, wobei das Bindemittel mindestens eines von einem Haftharz, einem Fluorkohlenstoffharz, einer Sol-Gel-Zusammensetzung, einem Schlicker aus Emailfritte, einem Lack, einem kondensierten Tannin umfasst.

4. Verfahren nach einem der vorstehenden Ansprüche, wobei das Substrat aus Substraten aus metallischem Material, Glassubstraten, Keramiksubstraten, Terrakottasubstraten, Kunststoffsubstraten ausgewählt ist.

5. Verfahren nach einem der vorstehenden Ansprüche, wobei der beheizbare Haushalts-Kleingeräteartikel ein Kochgeschirr oder ein Elektro-Kleingeräteartikel ist.

6. Verfahren nach einem der vorstehenden Ansprüche, wobei die Öffnung der Düse ein Größe von weniger oder gleich 1,5 mm hat.

7. Verfahren nach einem der vorstehenden Ansprüche, wobei die Zusammensetzung ferner funktionelle Füllstoffe enthält.

8. Verfahren nach einem der vorstehenden Ansprüche, wobei die durch Digitaldruck gedruckte nasse Schicht eine Dicke von mehr als 0,1 $\mu$m und weniger oder gleich 1000 $\mu$m aufweist.

9. Verfahren nach einem der vorstehenden Ansprüche, wobei die gebrannte thermostabile Beschichtung eine Dicke von mehr als 0,1 $\mu$m und weniger oder gleich 1000 $\mu$m aufweist.

10. Verfahren nach einem der vorstehenden Ansprüche, wobei die thermostabile Beschichtung ferner mindestens ein Dekor und/oder mindestens eine weitere Schicht, wie eine Grundierung, eine Primerschicht oder eine Schutzschicht, umfasst.

11. Verfahren nach einem der vorstehenden Ansprüche, **dadurch gekennzeichnet, dass** das Aufbringen durch Digitaldruck mit dem Tintenstrahlverfahren erfolgt.

**Claims**

1. Process for producing a small heating household equipment article comprising a substrate with at least two opposite faces, the process comprising:

   - providing said substrate; and
   - obtaining a heat-stable coating on said substrate, said obtaining step comprising:

     • depositing on at least one of the two opposite faces of said substrate of at least one layer of a composition comprising at least one binder; and
• curing said coated substrate,

**characterized in that** the composition comprising at least one binder has a dry matter content greater than or equal to 15% by weight, and
**in that** said deposition is carried out through digital printing via at least one nozzle having an aperture greater than or equal to 100 μm in size.

2. Process according to claim 1, wherein said composition has a dry matter content greater than or equal to 20% by weight.

3. Process according to any one of the preceding claims, wherein the binder comprises at least one of a bonding resin, a fluorocarbon resin, a sol-gel composition, an enamel frit slip, a lacquer, a condensed tannin.

4. Process according to any one of the preceding claims, wherein the substrate is chosen from among metallic material substrates, glass substrates, ceramic substrates, terracotta substrates, plastic substrates.

5. Process according to any of the preceding claims, wherein the small heating household equipment article is a culinary article or a small household appliance article.

6. Process according to any one of the preceding claims, wherein the size of the nozzle aperture is less than or equal to 1.5 mm.

7. Process according to any one of the preceding claims, wherein the composition further comprises functional fillers.

8. Process according to any one of the preceding claims, wherein the thickness of the wet layer printed by digital printing is greater than 0.1 μm and less than or equal to 1,000 μm.

9. Process according to any one of the preceding claims, wherein the thickness of the cured heat-stable coating is greater than 0.1 μm and less than or equal to 1,000 μm.

10. Process according to any one of the preceding claims, wherein the heat-stable coating further comprises at least one decoration and/or at least one other layer, such as an undercoat, a primer layer or a protective layer.

11. Process according to any one of the preceding claims, **characterized in that** said deposition is carried out through digital printing using the ink jet process.

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012085477 A
- US 6460980 B
- WO 2013013983 A
- WO 2016030566 A
- WO 2010146473 A